# EUROPEAN PATENT APPLICATION

(11) **EP 3 575 149 A1**
(43) Date of publication of application: **04.12.2019**
(21) Application number: 18854647.7
(22) Date of filing: 05.09.2018
(51) Int. Cl.: B60R 7/04, E02F 9/16

(54) **CONSOLE BOX FOR CONSTRUCTION MACHINE**

(30) Priority: 08.09.2017 JP 2017173358
(71) Applicant: Hitachi Construction Machinery Co., Ltd., Taito-ku Tokyo 110-0015 (JP)
(72) Inventor: ISAKA, Wataru, Tsuchiura-shi Ibaraki 300-0013 (JP); MANABE, Takeo, Tsuchiura-shi Ibaraki 300-0013 (JP); YAMADA, Saori, Tsuchiura-shi Ibaraki 300-0013 (JP)
(74) Representative: Manitz Finsterwald Patent- und Rechtsanwaltspartnerschaft mbB
(86) International application number: PCT/JP2018/032869
(87) International publication number: WO 2019/049887

(57) **Abstract**

A console box includes a unit, an exterior cover that has an opening into which the unit is fitted, and a fixing mechanism, in which the unit has an engagement piece provided at one end side, and a first through hole provided in the other end side, the exterior cover has a hole which is located on one end side of the opening and into which the engagement piece is inserted, and a second through hole provided at a position of the first through hole in a state where the unit is fitted into the opening at the other end side of the opening, the opening is inclined to cause one end side to be lower than the other end side, the fixing mechanism has an operation portion which is exposed to an external.

## Description

### TECHNICAL FIELD

The present invention relates to a console box provided in a cab of a construction machine.

### BACKGROUND ART

In a cab of a construction machine such as a hydraulic excavator or a wheel loader, a console box for housing small items and the like is provided in the vicinity of a driver's seat.

The following literature discloses a conventional console box. The conventional accommodation device (console box) has the following configuration. In other words, the accommodation device has a storage body having multiple storage portions each of which is provided with the substantially same opening as an opening of a vehicle interior member, and the storage body is attached movably relative to the vehicle interior member. In the accommodation device, one of the openings of the plurality of storage portions corresponds to the opening of the vehicle interior member according to the movement of the storage body, and any one of the storage portions can be selectively used through the opening.

### CITATION LIST

### PATENT LITERATURE

PATENT LITERATURE 1: Japanese Patent No. 3837349

### SUMMARY OF INVENTION

### TECHNICAL PROBLEM

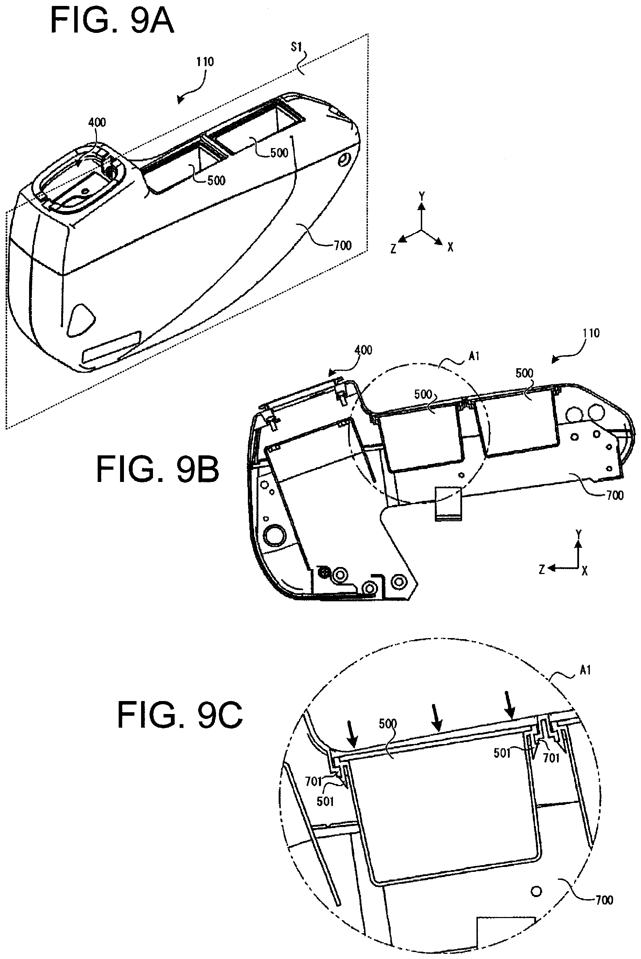

Moreover, a configuration shown in FIG. 9 has been known as a conventional console box different from that of Patent Literature 1 described above. This configuration will be described. FIG. 9A is a perspective view of a console box having a conventional configuration, and FIG. 9B is a cross-sectional view taken along a plane S1 shown in FIG. 9A. FIG. 9C is an enlarged view of an area A1 shown in FIG. 9B.

A lever mounting portion 400 for mounting a lever operated by an operator is located on a top surface of an exterior cover 700 forming an outer shell of a console box 110. Console pockets 500 for storing small items and so on is located at a rear of the lever mounting portion 400 (in a negative direction of a Z axis).

Each of the console pockets 500 has a hook 501 to each of a front end (a positive direction of the Z axis) and a rear end (refer to FIG. 9C). Further, a locking member 701 for engaging with each hook 501 is formed inside each opening of the exterior cover 700 which accommodates the console pocket 500. When each of the console pockets 500 is attached to the exterior cover 700, the console pocket 500 is pushed downward (in a direction of a solid line arrow shown in FIG. 9C), the locking member 701 of the exterior cover 700 and the hook 501 abut against each other so as to be engaged with each other. As a result, the console pockets 500 are accommodated in the exterior cover 700 and fixed at both the front and rear ends.

In the console box 110 having the above configuration, once the console pockets 500 are accommodated in the exterior cover 700 and fixed, a curved shape of the hooks 501 engages with the locking member 701, thereby making it difficult to move the console pockets 500 upwardly. In other words, the console pocket 500 cannot be easily removed from the exterior cover 700, and if the console pocket 500 is to be removed, the exterior cover 700 needs to be disassembled and removed.

On the other hand, in the construction machine to work at construction sites, since sand and dust are likely to be accumulated inside the console pockets 500 more than the general passenger cars, there is a need to frequently clean the inside of the pockets. If there is a need to disassemble the exterior cover 700 in order to remove the console pockets 500, the inside of the pockets is resultantly wiped and cleaned with the use of a hand towel or the like in consideration of the time and effort. On the other hand, if the console pockets 500 are removed and the console pockets 500 themselves are washed with water, cleaning can be performed efficiently, and a state after cleaning also becomes excellent.

In addition, the construction machines working at the construction sites and the like have many opportunities to travel on a bad road surface, and are affected by machine operations involved in a site work, so that the construction machines suffer from a greater amount of shock and vibration than general passenger cars. Therefore, there is a need to attach the console pockets 500 to the exterior cover 700 with a certain degree of rigidity so as to have a resistance to shock and vibration. Since the accommodation device disclosed in Patent Literature 1 described above is mainly intended for the general passenger cars, an ashtray member or the like corresponding to the console pocket is simply fitted into the storage portion, and a configuration for firmly attaching is not provided.

The present invention has been made in view of the above problem, and an object of the present invention is to provide a console box in which a unit such as a console pocket is firmly and easily detachably attached to a cover.

### SOLUTION TO PROBLEM

In order to solve the above problem, according to the present invention, typically, there is provided a console box including a unit having a rectangular box-like storage pocket or a rectangular plate-like operation panel open at an upper side; an exterior cover that has an opening into which the unit is fitted, and surrounds the unit; and a fixing mechanism that fixes the unit to the exterior cover, in which the unit has one or more engagement pieces provided at one end of the unit in a longitudinal direction, and a first through hole provided in the other end in the longitudinal direction, the exterior cover has a hole which is provided at a position on one end side of the opening in the longitudinal direction and into which the engagement piece is inserted, and a second through hole provided at a position corresponding to the first through hole in a state where the unit is fitted into the opening and the engagement piece is inserted into the hole at the other end side of the opening in the longitudinal direction, the opening is inclined to cause one end side to be lower than the other end side, the fixing mechanism has a mechanism which penetrates through the first through hole and the second through hole and fixes the unit to the exterior cover, and has an operation portion which is exposed to an external and operated when the unit is detached from and attached to the exterior cover.

### ADVANTAGEOUS EFFECTS OF INVENTION

According to the present invention, the unit attached to the console box can be firmly attached to the cover and can be easily attached to and detached from the cover. The problems, configurations, and effects other than those described above will be clarified by the description of the embodiments below.

### BRIEF DESCRIPTION OF DRAWINGS

[FIG. 1] FIG. 1 is a side view showing a hydraulic excavator.
[FIG. 2] FIG. 2 is a perspective view showing an example of a cab according to an embodiment.
[FIG. 3] FIG. 3 is a top view of the cab shown in FIG. 2.
[FIG. 4] FIG. 4 is a perspective view showing an example of a console box according to the embodiment.
[FIG. 5] FIG. 5A and FIG. 5B are the top view and the side view of a console pocket according to the embodiment.
[FIG. 6] FIG. 6A, FIG. 6B and FIG. 6C are the cross-sectional view and the enlarged view of the console box shown in FIG. 4.
[FIG. 7] FIG. 7 is a perspective view showing an example of the console box in the case of accommodating a button panel according to the embodiment.
[FIG. 8] FIG. 8A, FIG. 8B and FIG. 8C are the cross-sectional view and the enlarged view of the console box shown in FIG. 7.
[FIG. 9] FIG. 9A, FIG. 9B and FIG. 9C are the diagram showing a console box with a conventional configuration.

### DESCRIPTION OF EMBODIMENT

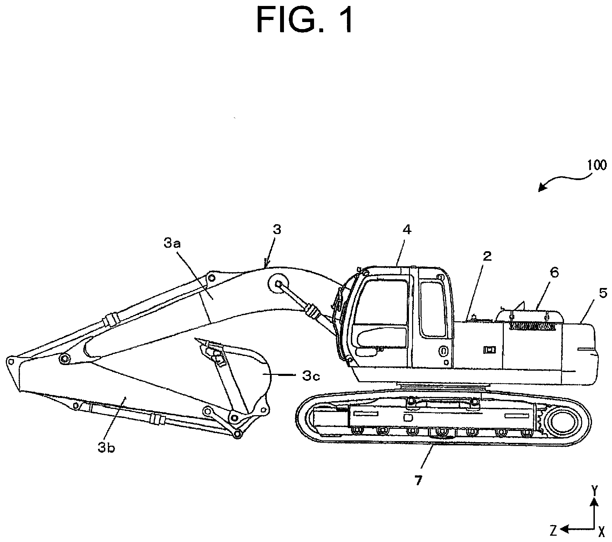

Hereinafter, a console box according to an embodiment will be described with reference to the drawings. The coordinate axes of an X axis, a Y axis, and a Z axis shown in the respective drawings all indicate the common direction. Further, a positive direction of the X axis is leftward, a negative direction is rightward, a positive direction of the Y axis is upward, and a negative direction is downward. Also, a positive direction of the Z axis is forward, and a negative direction is backward. Each direction is defined based on a work posture of FIG. 1.

FIG. 1 is a view showing a hydraulic excavator as an example of a construction machine. A hydraulic excavator 100 has a pair of left and right undercarriages 7 and an upperstructure 2 disposed on the undercarriages 7 and configuring a main body. The hydraulic excavator 100 further includes a working machine 3 attached to the upperstructure 2 and including a boom 3a, an arm 3b, and a bucket 3c which can be turned in a vertical direction.

A cab 4 is provided at a front position of the upperstructure 2 and a counterweight 5 is provided at a rear position of the upperstructure 2. An engine compartment 6 and the like are disposed between the cab 4 and the counterweight 5.

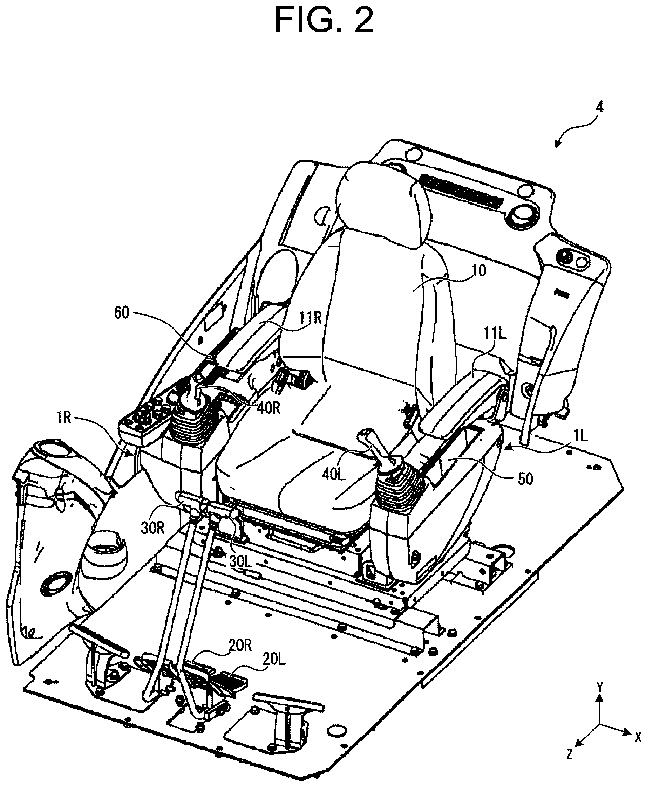

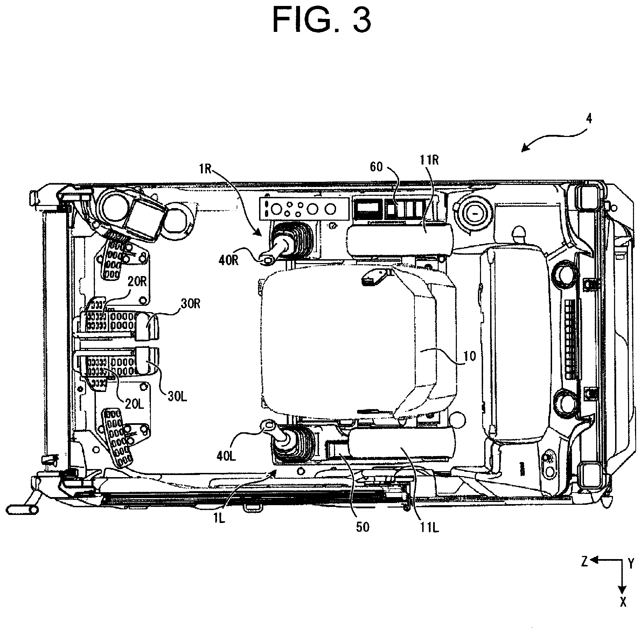

FIG. 2 is a perspective view showing the inside of the cab 4, and FIG. 3 is a top view of the inside of the cab 4. A right control lever 40R and a left control lever 40L are provided on the left and right sides of driver's seat 10, respectively. The right control lever 40R is a lever for performing the operation of raising and lowering the boom 3a and the operation of raising and lowering the bucket 3c. The left control lever 40L is a lever for performing the dumping and crowding operation of the arm 3b and the operation of laterally rotating the upperstructure 2. A correspondence between the operation direction of each lever and each operation is not limited to the above pattern.

A right side travel lever 30R and a left side travel lever 30L are disposed in front of the driver's seat 10. A right crawler of the undercarriage 7 performs forward movement operation and reverse movement operation due to the forward and backward operation of the right travel lever 30R. Further, a left crawler of the undercarriage 7 performs the forward movement operation and the reverse movement operation due to the forward and backward operation of the left side travel lever 30L. When an operator simultaneously operates the left and right side levers 30R and 30L in the same direction, both the crawlers operate simultaneously, and the hydraulic excavator 100 travels straight or backward.

The right side pedal 20R is disposed at a floor base of the right side travel lever 30R, and interlocked with the movement of the right side travel lever 30R. The left side pedal 20L is disposed at the floor base of the left side travel lever 30L, and interlocked with the movement of the left side travel lever 30L. In other words, the right crawler and the left crawler can perform the forward and reverse movement operation even by a pedal operation on the right side pedal 20R and the left side pedal 20L. Further, when the operator simultaneously depresses the pedals 20R and 20L, the hydraulic excavator 100 goes straight and can control a steering of the hydraulic excavator 100 by providing a stepping difference.

In this way, the operator operates the lever or pedal with the limbs, so that the hydraulic excavator 100 is operated in accordance with operation of the operator.

A right armrest 11R and a left armrest 11L are provided on the left and right sides of the driver's seat 10 so as to pivot around the end. A console box 1R is disposed below the right armrest 11R. The right control lever 40R is provided on a front side of the upper surface of the console box 1R. A switch panel 60 is provided on the rear side of a top surface of the console box 1R. A console box 1L is disposed below the left armrest 11L. The above-mentioned left control lever 40L is provided on the front side of the top surface of the console box 1L, and a console pocket 50 is provided on the rear side of the top surface.

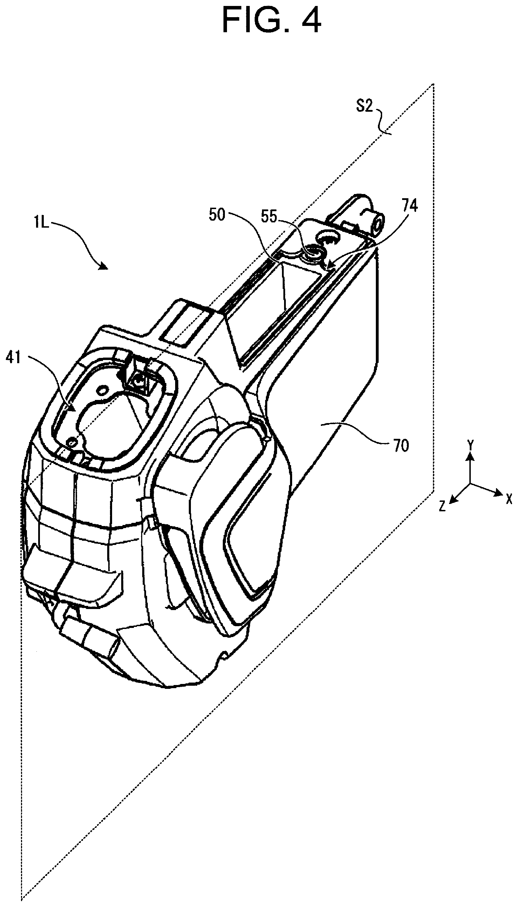

FIG. 4 is a perspective view of the console box 1L. The console box 1L has a structure in which the console pocket 50 is mounted and accommodated in the opening 74 of the exterior cover 70. Although the exterior cover 70 and the console pocket 50 are both made of resin in the present embodiment, the present invention is not limited to the above example. The console pocket 50 is fixed to the exterior cover 70 at a rear position of the lever mounting portion 41 serving as the mounting opening of the left control lever 40L by the fixing mechanism 55.

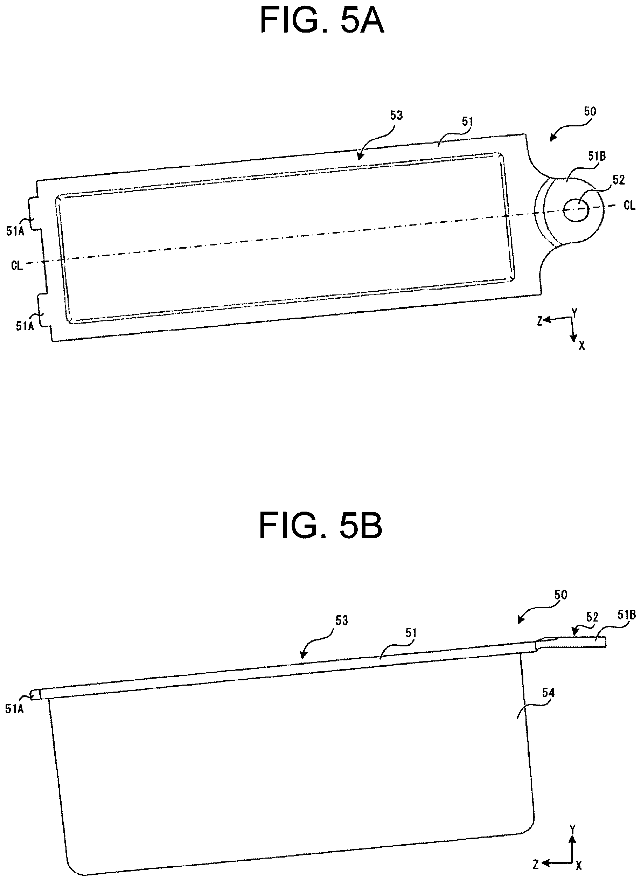

FIG. 5A is a top view showing the entire console pocket 50, and FIG. 5B is a side view of the console pocket 50. The console pocket 50 has a main body 54 for storing small items and the like, and an opening 53 for taking in and out the small items and the like.

The opening 53 has an outwardly projecting flange portion 51 formed substantially at right angles from a side wall surface of the main body 54. The flange portion 51 is a plate-like frame which defines a size of an opening area, and has a convex portion 51A and a fixed end 51B.

The convex portion 51A is one or more engagement pieces formed on a front end of the flange portion 51 in a longitudinal direction (Z-axis direction) of the console pocket 50, and formed with two engagement pieces in the present embodiment. Although the convex portion 51A has a rectangular flat plate shape in the present embodiment, the shape is not limited to the above example. The convex portions 51A are provided on the respective left and right sides of a center line CL shown in FIG. 5A. Further, the convex portions 51A are provided such that distances from the center line CL are the same in the left-right direction.

The fixed end 51B is formed at the rear end of the flange portion 51 in the longitudinal direction (Z-axis direction) of the console pocket 50. The fixed end 51B is a portion fixed to the exterior cover 70 by the fixing mechanism 55. The fixed end 51B has a flat plate shape in the present embodiment, and a through hole 52 (first through hole) through which a screw penetrates is provided at the central portion. The fixed end 51B and the through hole 52 are provided such that the centers of the fixed end 51B and the through hole 52 are located immediately above the center line CL.

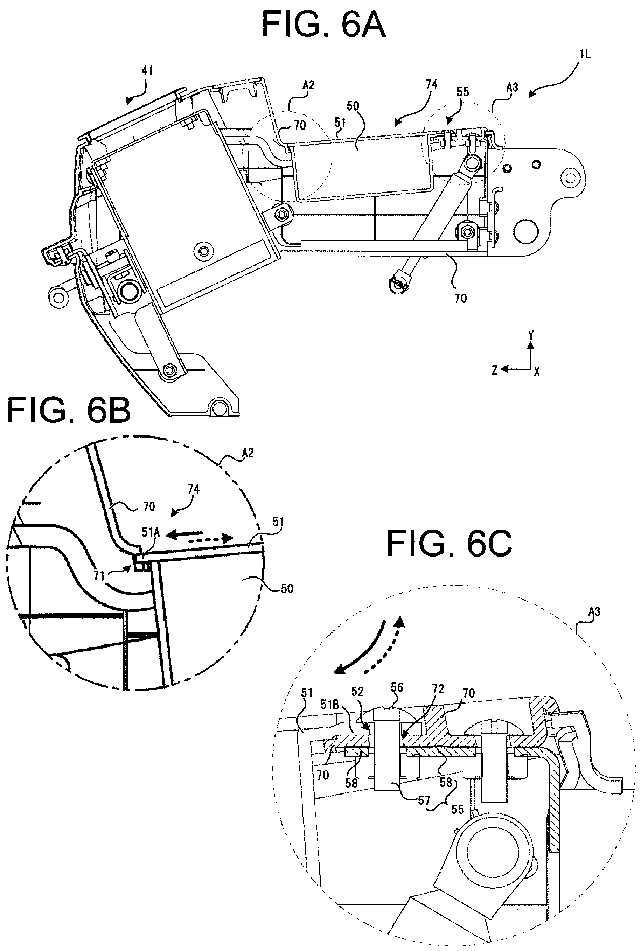

FIG. 6A is a cross-sectional view of the console box 1L, which is a cross-sectional view taken along a plane S2 shown in FIG. 4. FIG. 6B is an enlarged view of an area A2 shown in FIG. 6A, and FIG. 6C is an enlarged view of the area A3.

With the console pocket 50 attached to the exterior cover 70, the two convex portions 51A of the console pocket 50 are respectively inserted into a hole 71 provided inside the opening 74 of the exterior cover 70. (refer to FIG. 6B). The other fixed end 51B is fixed to the exterior cover 70 by inserting a screw 57 into the through hole 52 (refer to FIG. 6C) .

As shown in FIG. 6C, the fixing mechanism 55 is configured by a screw 57 which is a metal member and a sheet metal plate 58. The sheet metal plate 58 is provided with a screw hole for screwing with the screw 57. Further, the exterior cover 70 is provided with a through hole 72 (second through hole) through which the screw 57 penetrates. The through hole 72 is provided at a position corresponding to the through hole 52 in a state where the console pocket 50 is fitted into the opening 74. In other words, the through hole 72 of the exterior cover 70 and the through hole 52 of the fixed end 51B are put on each other at the same position to provide one hole in a state in which two convex portions 51A of the console pocket 50 is inserted into the hole 71 of the exterior cover 70. The shaft portion of the screw 57 passes through the hole provided by the through hole 52 and the through hole 72, and is screwed into a screw hole of the sheet metal plate 58 to be firmly tightened. As a result, the fixed end 51B of the console pocket 50 and the exterior cover 70 are vertically clamped by the head 56 of the screw 57 and the sheet metal plate 58, and the console pocket 50 is fixed to the exterior cover 70. In the present embodiment, although the through hole 72 of the exterior cover 70 and the through hole 52 of the fixed end 51B merely penetrate through the shaft portion of the screw 57 without being screwed with the shaft of the screw 57, but the through hole 72 and the through hole 52 may be screwed with the shaft portion of the screw 57.

Next, the operation of attaching the console pocket 50 by the operator will be described. Solid arrows shown in FIGS. 6B and 6C indicate a moving direction of the console pocket 50 when the console pocket 50 is attached to the exterior cover 70.

The operator first causes the console pocket 50 to enter from the rear upper side of the exterior cover 70, and abuts the frame on the opening 74 side of the exterior cover 70 against the front portion of the flange portion 51. After the abutment, the operator further moves the console pocket 50 in the forward direction while sliding on the frame of the opening 74 side, and inserts the convex portion 51A into the hole 71. After the insertion, the operator moves the fixed end 51B side downward, and accommodates the entire console pocket 50 in the exterior cover 70. With the above operation, the console pocket 50 is fitted into the exterior cover 70 to put into a state of being supported from the exterior cover 70 by the convex portion 51A, the fixed end 51B, and so on. Further, a position of the through hole 52 of the console pocket 50 is put on the position of the through hole 72 of the exterior cover 70 and the position of the screw hole of the sheet metal plate 58 to provide a hole through which the screw 57 is inserted.

Next, the operator inserts the screw 57 into the hole thus provided and rotates the head 56 of the screw 57 in a tightening direction with the use of a tool such as a screwdriver. As a result, the screw 57 penetrating through the fixed end 51B of the console pocket 50 and the exterior cover 70 starts to be screwed into the sheet metal plate 58. With the further rotation of the head 56 of the screw 57 in the tightening direction, the fixed end 51B of the console pocket 50 and the exterior cover 70, are clamped in the vertical direction by being sandwiched between the head 56 of the screw 57 and the sheet metal plate 58.

With the above series of operations, the installation of the console pocket 50 is completed.

When removing the console pocket 50, the operator performs the reverse operation to that described above.
Broken arrows shown in FIGS. 6B and 6C indicate the moving direction of the console pocket 50 when the console pocket 50 is removed from the exterior cover 70.

When removing the console pocket 50, the operator rotates the screw head 56 in a loosening direction with the use of a tool such as a screwdriver to remove the screw 57. Then,
after lifting the rear portion of the console pocket 50 upward, the operator moves the console pocket 50 backward and upward. In conjunction with the movement, the convex portion 51A moves in a direction indicated by a broken line arrow in FIG. 6B and is pulled out from the hole 71 of the exterior cover 70. As a result, the removal of the console pocket 50 is completed.

In the present embodiment, a set of the metal screw member and the sheet metal plate is shown as an example of the fixing mechanism. Both those components are made of a metallic member, thereby being capable of alleviating loosening of the screw and collapse of the threads due to shock or vibration. Note that one example of the fixing mechanism is not limited to the above example. The fixing mechanism may be a set of a bolt and a nut or a resin clip.

Further, as shown in FIGS. 4 and 6, the screw head 56, which is an operation portion for performing the tightening operation and the loosening operation is not covered with the cover member in the present embodiment, and a configuration in which the screw head 56 is exposed to the outside is applied. With the above configuration, the trouble of attaching and detaching the cover member can be eliminated, and the screw 57 can be attached and detached immediately.

Further, when the console pocket 50 is attached to exterior cover 70, the operator advances the console pocket 50 forward while sliding on the frame of the opening 74. Under the present circumstances, as shown to FIG. 6A and other figures, a configuration is applied in which the opening 74 of the exterior cover 70 is inclined so that a front of the exterior cover 70 in an advancing direction becomes lower, as a result of which the console pocket 50 can be easily advanced while utilizing the self-weight of the console pocket 50.

Further, an opening surface and a bottom surface of the console pocket 50 are substantially parallel to each other as shown in FIG. 5B. With the above structure, when the console pocket 50 is attached to the exterior cover 70, the bottom surface of the console pocket 50 is also accommodated in an inclined posture such that the front is lower (refer to FIG. 6A). Since the console pocket 50 is accommodated as described above, even if the sand and dust enter the console pocket 50, those dusts are not distributed throughout the bottom surface, and tend to be accumulated forward, and are easily removed.

The console pocket 50 has, as shown in FIG. 5A, two convex portions 51A which are located at the front end in the longitudinal direction and one fixed end 51B which is located at the rear end, and is supported by the exterior cover 70 at those three points. In the case of supporting at two points, the console pocket 50 tends to rotate about the two points, and the opening surface cannot be determined. Further, in the case of supporting at four or more points, a gap is provided at any point due to a manufacturing error of each part or the like, or the forcible attachment tends to distort the opening surface. According to the present embodiment, since the console pocket 50 is supported at three points, and supported at both ends in the longitudinal direction, the console pocket 50 can be placed in a more stable state. Further, in the present embodiment, when two of those three points are connected to each other by a straight line, the other one point is placed at a position deviated from the straight line. For example, in the case of FIG. 5A, when one convex portion 51A and the fixed end 51B are connected to each other by a straight line, the other convex portion 51A is formed at a position deviated from the straight line. Further, when the two convex portions 51A are connected to each other by a straight line, the fixed end 51B is formed at a position deviated from the straight line. In this way, the support members are placed so that three support members form one surface, in other words, all three support members are not formed on one straight line.

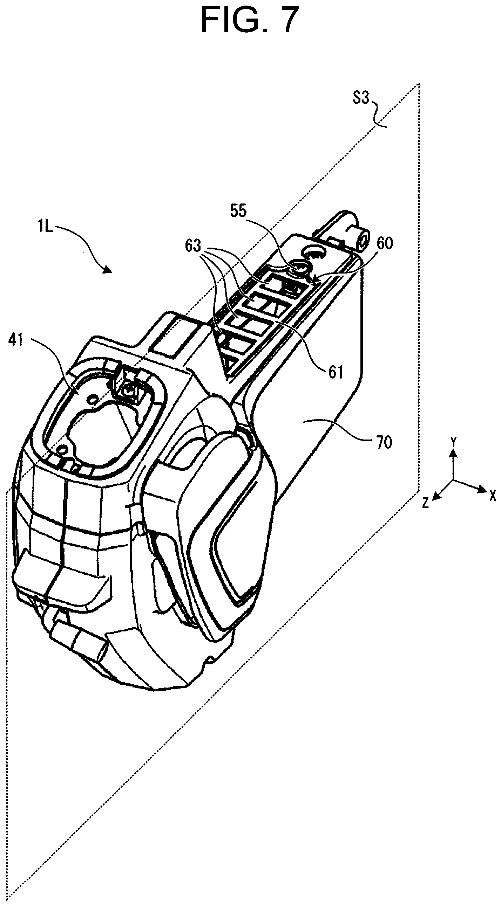

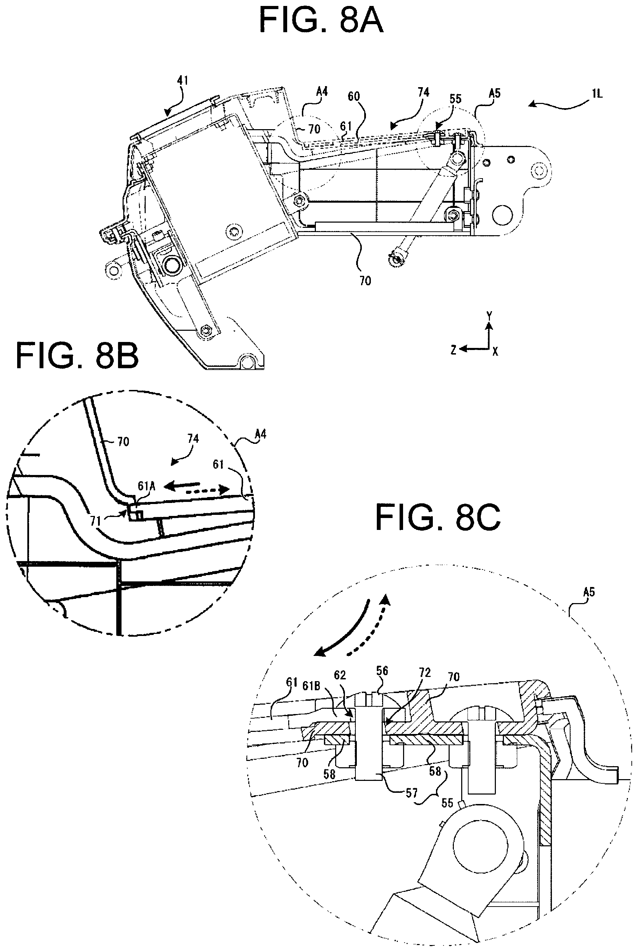

Next, a mounting example in which the switch panel 60 shown in FIGS. 2 and 3 is attached to the exterior cover 70 instead of the console pocket 50 will be described. FIG. 7 is a perspective view of the console box 1L when the switch panel 60 is attached to the exterior cover 70. FIG. 8A is a cross-sectional view of the console box 1L taken along a plane S3 shown in FIG. 7. FIG. 8B is an enlarged view of an area A4 shown in FIG. 8A, and FIG. 8C is an enlarged view of an area A5.

The switch panel 60 has a flat plate-shaped frame 61 in which various buttons (not shown in FIGS. 7 and 8) and holes 63 for placing the various buttons are provided. An outer shape of the frame 61 is the same as that of the flange portion 51 of the console pocket 50 described above. In other words, the frame 61 has two convex portions 61A at the front end and a fixed end 61B at the rear end (refer to FIGS. 8B and 8C) .

The convex portions 61A are at the same position and with the same shape as those of the two convex portions 51A shown in FIG. 5, and two convex portions 61A are provided in front of the frame 61. Those convex portions 61A are inserted into the holes 71 of the exterior cover 70 at the time of installing the frame 61 (refer to FIG. 8B). The fixed end 61B also has the same position and the same shape as those of the fixed end 51B shown in FIG. 5, and has a through hole 62 (first through hole) (refer to FIG. 8C). The switch panel 60 is fixed to the exterior cover 70 by the screw 57 of the fixing mechanism 55 and the sheet metal plate 58.

As described above, the outer shape of the flange portion 51 of the console pocket 50 and the outer shape of the frame 61 have the same shape, so that the attachment and detachment of the switch panel 60 with respect to the exterior cover 70 are performed in the same method as that of the console pocket 50. In other words, when the switch panel 60 is attached to the exterior cover 70, as shown by a solid line arrow in FIG. 8C, the operator advances the switch panel 60 obliquely downward from an upper side to the opening 74 of the exterior cover 70. In conjunction with the above advancement, the convex portions 61A positioned at the front end of the switch panel 60 is inserted into the holes 71 of the exterior cover 70 in a direction indicated by the solid line arrow in FIG. 8B. After being inserted, the operator moves the fixed end 61B downward, places the switch panel 60 on the frame of the opening 74, and fixes the switch panel 60 with the screw 57 with the use of a tool such as a screwdriver. When removing the switch panel 60 from the exterior cover 70, the operator first removes the screw 57 and lifts the rear end of the switch panel 60 in a direction indicated by the broken line arrow shown in FIG. 8C, that is, obliquely upward. In conjunction with the above operation, the convex portions 61A also move in a direction of a broken line arrow in FIG. 8B and are pulled out of the holes of the exterior cover 70.

As described above, since the exterior cover 70 can attach both the console pocket 50 and the switch panel 60, mutual parts replacement of the console pocket 50 and the switch panel 60 is facilitated.

In the present embodiment, the console box 1L located on the left side of the driver's seat 10 is described as an example, but may be applied to the console box 1R located on the right side of the driver's seat 10. In addition, the mode of the present embodiment may be applied to a door console panel, a center console box, and so on which are mainly disposed in the general passenger car.

Further, in the present embodiment, two units of the console pocket 50, which is a rectangular box-like storage pocket, and the switch panel 60 having a rectangular plate-like operation panel are illustrated as the mounting units to be attached to the console box. The present invention is not limited to the above configuration, and may be a unit of any application. For example, various units can be considered, such as a unit of an operation lever, a unit including an outlet, a unit including a USB (Universal Serial Bus) connector, and a unit including a touch panel display.

In the present embodiment, the hydraulic excavator has been described as the construction machine, however, the present invention is not limited to the above configuration, and for example, the present embodiment can be applied to a vehicle having a cab in which the console box can be placed such as a wheel loader and a dump truck.

As has been described above in detail, according to the present embodiment, the console pocket can be easily attached to and detached from the exterior cover, and the console pocket can be firmly fixed to the exterior cover by fixedly fastening with a screw or the like.

### REFERENCE SIGNS LIST

1L, 1R: console box, 2: upperstructure, 3, working machine, 3a: boom, 3b: arm, 3c: bucket, 4: cab, 5: counterweight, 6: engine compartment, 7: undercarriage, 10: driver's seat, 11L: left armrest, 11R: right armrest, 20L: left pedal, 20R: right pedal, 30L: left travel lever, 30R: right travel lever, 40L: left control lever, 40R: right control lever, 41: lever mounting portion, 50: console pocket, 51: flange portion, 51A: convex portion, 51B: fixed end portion, 52: through hole, 53: opening, 54: main body portion, 55: fixing mechanism, 56: screw head, 57: screw, 58: sheet metal plate, 60: switch panel, 61: frame, 61A: convex portion, 61B: fixed end portion, 62: through hole, 63: hole, 70: exterior cover, 71: hole, 72: through hole, 74: opening, 100: hydraulic excavator

## Claims

1. A console box comprising: a unit having a rectangular box-like storage pocket or a rectangular plate-like operation panel open at an upper side; an exterior cover that has an opening into which the unit is fitted, and surrounds the unit; and a fixing mechanism that fixes the unit to the exterior cover,
wherein the unit has one or more engagement pieces provided at one end of the unit in a longitudinal direction, and a first through hole provided in the other end in the longitudinal direction,
the exterior cover has a hole which is provided at a position on one end side of the opening in the longitudinal direction and into which the engagement piece is inserted, and a second through hole provided at a position corresponding to the first through hole in a state where the unit is fitted into the opening and the engagement piece is inserted into the hole at the other end side of the opening in the longitudinal direction, the opening is inclined to cause one end side to be lower than the other end side, and
the fixing mechanism has a mechanism which penetrates through the first through hole and the second through hole and fixes the unit to the exterior cover, and has an operation portion which is exposed to an external and operated when the unit is detached from and attached to the exterior cover.

2. The console box according to claim 1,
wherein the fixing mechanism includes a metal screw member having the operation portion, and a sheet metal plate in which a screw hole to be screwed with a shaft portion of the screw member is provided, and
the shaft portion of the screw member penetrates through the first through hole and the second through hole and screwed with the screw hole of the sheet metal plate.

3. The console box according to claim 1, wherein the unit has two engagement pieces and one first through hole, and the engagement pieces and the first through hole are not aligned on one straight line.

4. The console box according to claim 2, wherein the unit has two engagement pieces and one first through hole, and the engagement pieces and the first through hole are not aligned on one straight line.
